# EUROPEAN PATENT APPLICATION

(11) **EP 2 410 437 A1**
(43) Date of publication of application: **25.01.2012**
(21) Application number: 10753356.4
(22) Date of filing: 15.02.2010
(51) Int. Cl.: G06F 15/00, G06F 13/00

(54) **SERVICE LINKAGE DEVICE, PROGRAM, SERVICE LINKAGE METHOD, AND SERVICE PROVISION SYSTEM**

(30) Priority: 18.03.2009 JP 2009065543
(71) Applicant: Hitachi, Ltd., Chiyoda-ku Tokyo 100-8280 (JP)
(72) Inventor: HAYASHI, Naoki, Kawasaki-shi Kanagawa 215-0013 (JP); KAJI, Tadashi, Kawasaki-shi Kanagawa 215-0013 (JP); YATO, Akifumi, Kawasaki-shi Kanagawa 215-0013 (JP); YAMAMOTO, Dan, Kawasaki-shi Kanagawa 215-0013 (JP); IRUBE, Shinichi, Kawasaki-shi Kanagawa 212-8567 (JP)
(74) Representative: MERH-IP Matias Erny Reichl Hoffmann
(86) International application number: PCT/JP2010/052215
(87) International publication number: WO 2010/106861

(57) **Abstract**

A processing load on service is distributed to improve the availability of linkage service even if the details of the processing of the linkage service are unknown. A service dynamic linkage device (110) sequentially selects pieces of web service which can be executed on the basis of dependence relationship information having identified a web server which should have already been executed among pieces of web service included in a scenario, the execution of which has been requested from a user-side communication terminal (140), and repeatedly performs processing to be executed until there are no pieces of web service included in the scenario.

## Description

### Technical Field

The present invention relates to a technique of providing a plurality of Web services, coordinating them according to a scenario.
The present application claims the priority of Japanese Patent Application No. 2009-65543 filed on March 18, 2009, the contents of which are incorporated herein by reference.

### Background Art

Recently, distributed computing utilizing Web services is spreading widely. Common Web services use, for communication between modules, Simple Object Access Protocol (SOAP) that is an application of Extensible Markup Language (XML) technique based on Hypertext Transfer Protocol (HTTP) which is a common Web protocol. Considering future appearance of Next Generation Network (NGN) to realize higher reliability and higher communication quality, it is anticipated that distributed computing utilizing Web services will be used not only in a conventional relatively-closed network such as a corporate network but also in a widely-open network.

Spread of Web services is promoting development of a process description language for composing a coordinated service that is realized by coordination of a plurality of Web services. Main specifications of such languages are ones of Web Services Business Process Execution Language (WSBPEL) prescribed by OASIS and Business Process Modeling Notation (BPMN) prescribed by OMG. A coordinated service is defined by a scenario that describes an execution sequence of Web services in such a process description language. When a service coordinate control apparatus for controlling coordination of services receives a coordinated service execution request (a scenario execution request) from a user, it interprets the scenario and executes the Web services sequentially to provide the coordinated service to the user.

As a recent trend in service provision by a service provider to users, importance is placed not only on service functions but also on service quality including availability. Thus, also in provision of a coordinated service, it is important that the service can be provided stably even when users' requests for execution of the scenario increase in frequency.

As a technique of improving the availability of a coordinated service, the technique described in Patent Document 1 can be mentioned for example. This technique prepares in advance a function that is used as a substitute when congestion occurs in a Web service as a component of a scenario. When a Web service is being congested, the scenario part including that Web service is executed by using the substitute function, to distribute the load.

Patent Document 1: Japanese Un-examined Patent Application Laid-Open No. 2008-250953

The technique described in Patent Document 1 improves the availability of a coordinated service by preparing an apparatus that provides a substitute for a Web service as a component of a scenario. However, in the case of services distributed in an open network, administrating entities to control respective services are different from one another. When an administrating entity provides his Web service while hiding details of its processing from the outside, an administrator of a service coordination apparatus or a constructor of a coordinated service cannot prepare by himself an apparatus that provides a substitute function.

### Disclosure of the Invention

The present invention provides a technique of distributing the processing load of a coordinated service and improving the availability of the coordinated service even when details of the processing of the coordinated service are not known.

The present invention is characterized in that, among Web services included in a scenario, a Web service that can be provided is selected and executed one after another.

One example disclosed in the following provides a service coordinating apparatus that coordinates a plurality of Web services according to a scenario, to perform processing corresponding to the scenario, wherein: the service coordinating apparatus comprises: a storage part for storing dependency information that specifies for each scenario one Web service and other Web services that should have been executed when the one Web service is executed; and a control part; and the control part repeats processing of specifying based on the dependency information the one Web service for which the above-mentioned other Web services have been executed and executing the specified Web service, until there is no Web service included in the scenario.

According to the present invention, even if details of coordinated services are not known, it is possible to distribute the processing loads of the services, improving the availability of the coordinated services.

### Brief Description of Drawings

Fig. 1 is a schematic diagram showing an example of a service providing system;
Fig. 2 is a schematic diagram showing an example of a dynamic service coordinating apparatus;
Fig. 3 is a schematic diagram showing an example of a scenario setting information table;
Fig. 4 is a schematic diagram showing an example of a scenario variable definition information table;
Fig. 5 is a schematic diagram showing an example of a scenario execution information table;
Fig. 6 is a schematic diagram showing an example of an interface information table;
Fig. 7 is a schematic diagram showing an example of a dependency information table;
Fig. 8 is a schematic diagram showing an example of a processing sequence of a CTI scenario;
Fig. 9 is a schematic diagram showing an example of a load condition measurement setting information table;
Fig. 10 is a schematic diagram showing an example of a load condition judgment information table;
Fig. 11 is a schematic diagram showing an example of a computer;
Fig. 12 is a flowchart showing an example of start-up processing;
Fig. 13 is a flowchart showing an example of load condition measurement processing;
Fig. 14 is a flowchart showing an example of service coordination processing; and
Fig. 15 is a flowchart showing an example of load condition judgment processing.

### Best Mode for Carrying Out the Invention

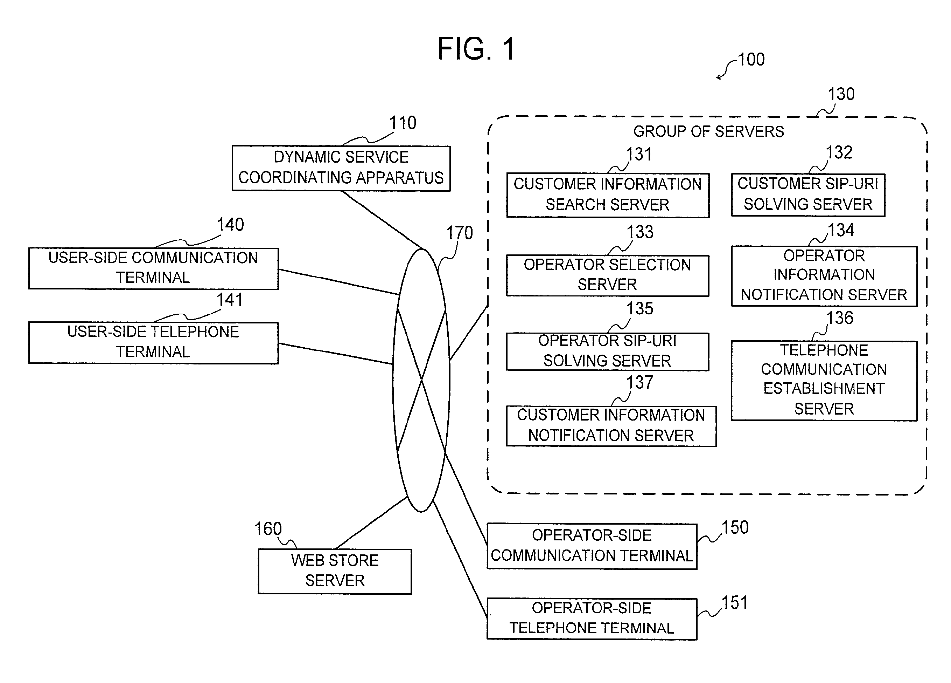

Fig. 1 is a schematic diagram showing a service providing system 100. As shown in the figure, the service providing system 100 comprises a dynamic service coordinating apparatus 110, a group of servers 130, a user-side communication terminal 140, a user-side telephone terminal 141, an operator-side communication terminal 150, an operator-side telephone terminal 151, and a Web store server 160, with these components being able to send and receive information to and from one another through a network 170.

In the service providing system 100, the user-side communication terminal 140 sends a scenario execution request to the dynamic service coordinating apparatus 110 by using SOAP or HTTP.

Receiving the scenario execution request, the dynamic service coordinating apparatus 110 analyzes the received request, executes the designated scenario, and sends the result to the user-side communication terminal 140 by using SOAP or HTTP.

Here, in the present embodiment, operation of the service providing system 100 will be described taking a "Call Telephony Integration (CTI) scenario" as a concrete example of scenario. Of course, the present invention is not limited to this embodiment.

A CTI scenario is one of business systems of a call center, and provides a function of receiving inquiries about detailed information on goods from customers through the Web.

For example, a company that provides a service platform provides a platform for realizing a Web store through the Web store server 160 connected to the network 170. Some company has a virtual store on the Web store realizing platform through the Web store server 160, to show contents for introducing a list of goods to the public.

A customer of the Web store uses the user-side communication terminal 140 to browse contents made public through the Web store server 160, and inquires of an operator of a customer center of the Web store as to details of the goods that he is browsing.

An inquiry request is sent to the dynamic service coordinating apparatus 110 when the customer clicks a detail inquiry button provided in the contents that he is browsing.

Receiving the inquiry request, the dynamic service coordinating apparatus 110 coordinates Web services provided by servers in the group of servers 130, in order to perform coordinated processing such as selection of an operator corresponding to the customer's rank (such as Guest, Silver or Gold), provision of information (name, assigned area and/or the like) of the operator taking charge of the customer, provision of detailed information (name, customer rank, purchase history and/or the like) of the customer, establishment of a telephone communication between the user-side telephone terminal 141 of the customer and the operator-side telephone terminal 151 of the operator, and the like.

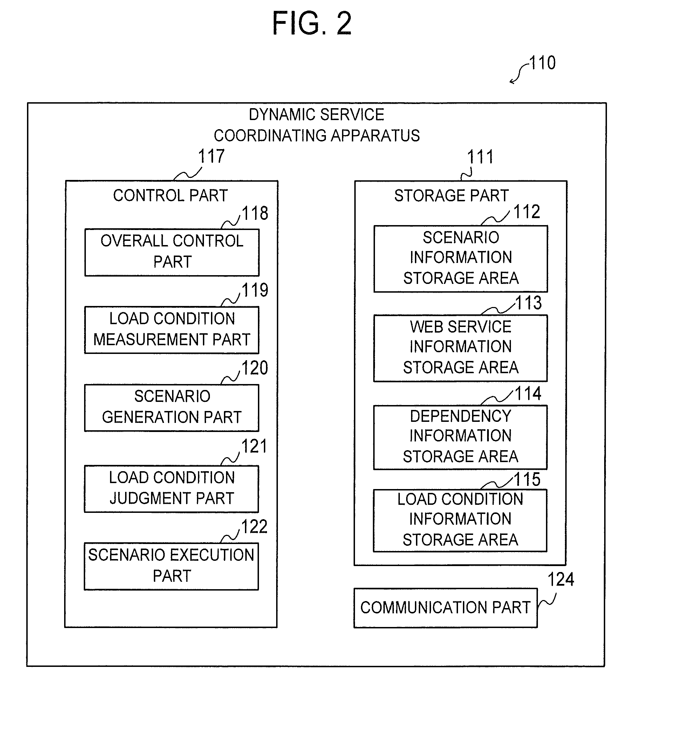

Fig. 2 is a schematic diagram showing the dynamic service coordinating apparatus 110. As shown in the figure, the dynamic service coordinating apparatus 110 comprises a storage part 111, a control part 117 and a communication part 124.

The storage part 111 comprises a scenario information storage area 112, a Web service information storage area 113, a dependency information storage area 114, and a load condition information storage area 115.

The scenario information storage area 112 stores: scenario setting information, which specifies Web services included in a scenario used for coordinated processing by the dynamic service coordinating apparatus 110 and specifies setting in the scenario in question; scenario variable definition information, which specifies definitions of variables used in the scenario used for the coordinated processing by the dynamic service coordinating apparatus 110; and scenario execution information, which specifies variables used in execution of the Web services included in the scenario used for the coordinated processing by the dynamic service coordinating apparatus 110.

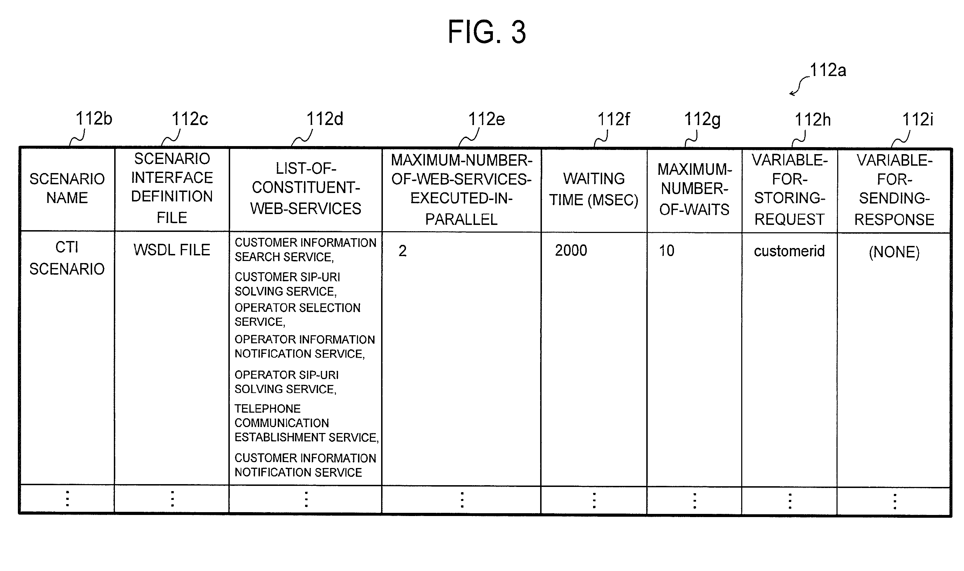

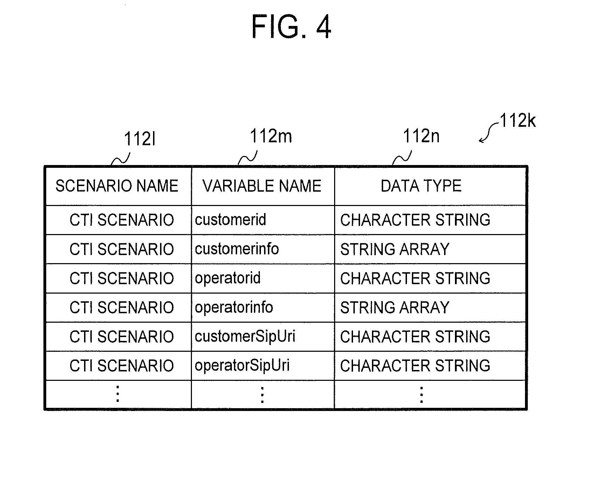

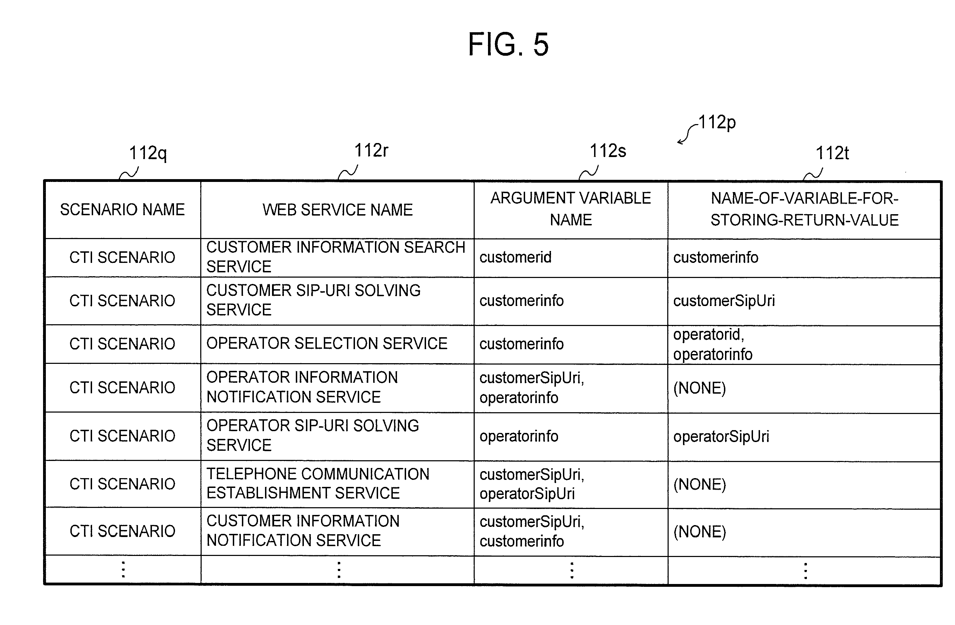

For example, in the present embodiment, the scenario information storage area 112 stores a scenario setting information table 112a as shown in Fig. 3 (a schematic diagram showing the scenario setting information table 112a), a scenario variable definition information table 112k as shown in Fig. 4 (a schematic diagram showing the scenario variable definition information table 112k), and a scenario execution information table 112p as shown in Fig. 5 (a schematic diagram showing the scenario execution information table 112p).

The scenario setting information table 112a as shown in Fig. 3 has a scenario name field 112b, a scenario interface definition file field 112c, a list-of-constituent-Web-services field 112d, a maximum-number-of-Web-services-executed-in-parallel field 112e, a waiting time field 112f, a maximum-number-of-waits field 112g, a variable-for-storing-request field 112h, and a variable-for-sending-response field 112i.

The scenario name field 112b stores information that specifies a scenario used for coordinated processing performed by the dynamic service coordinating apparatus 110. For example, in the present embodiment, a scenario name is stored as the information specifying such a scenario.

The scenario interface definition file field 112c stores information that specifies a definition file defining an interface used by the scenario specified in the scenario name field 112b. For example, in the present embodiment, a file name of a definition file is stored as the information specifying such a definition file defining the interface.

The list-of-constituent-Web-services field 112d stores information that specifies Web services constituting the scenario specified in the scenario name field 112b. For example, in the present embodiment, service names of Web services are stored as the information specifying such Web services.

The maximum-number-of-Web-services-executed-in-parallel field 112e stores information specifying the maximum number of Web services that are executed in parallel among Web services included in the scenario specified in the scenario name field 112b.

The waiting time field 112f stores information that specifies a time of waiting for execution of a Web service included in the scenario specified in the scenario name field 112b.

The maximum-number-of-waits field 112g stores information that specifies the maximum number of times of waiting for execution of Web services included in the scenario specified in the scenario name field 112b.

The variable-for-storing-request field 112h stores information that specifies a variable for storing an argument included in a request message at the time of receiving a scenario execution request for the scenario specified in the scenario name field 112b.

The variable-for-sending-response field 112i stores information that specifies a variable used for a response sent at the time of termination of execution of the scenario specified in the scenario name field 112b.

The scenario variable definition information table 112k shown in Fig. 4 has a scenario name field 1121, a variable name field 112m, and a data type field 112n.

The scenario name field 1121 stores information that specifies a scenario used for coordinated processing performed by the dynamic service coordinating apparatus 110. For example, in the present embodiment, a scenario name is stored as the information specifying such a scenario.

The variable name field 112m stores information specifying a variable that is necessary to be read by the below-described scenario execution part 122 of the control part 117 at the time of execution of the scenario specified in the scenario name field 1121. For example, in the present embodiment, a name of a variable is stored as the information specifying such a variable.

The data type field 112n stores information that specifies a data type of the variable specified in the variable name field 112m.

The scenario execution information table 112p shown in Fig. 5 has a scenario name field 112q, a Web service name field 112r, an argument variable name field 112s, and a name-of-variable-for-storing-return-value field 112t.

The scenario name field 112q stores information that specifies a scenario used for coordinated processing performed by the dynamic service coordinating apparatus 110. For example, in the present embodiment, a scenario name is stored as the information specifying such a scenario.

The Web service name field 112r stores information that specifies a Web service as a component of the scenario specified in the scenario name field 112q. For example, in the present embodiment, a service name of a Web service is stored as the information specifying such a Web service.

The argument variable name field 112s stores information that specifies variables used as arguments in execution of the Web service specified in the Web service name field 112r.

The name-of-variable-for-storing-return-value field 112t stores information that specifies variables in which return values are stored as a result of execution of the Web service specified in the Web service name field 112r.

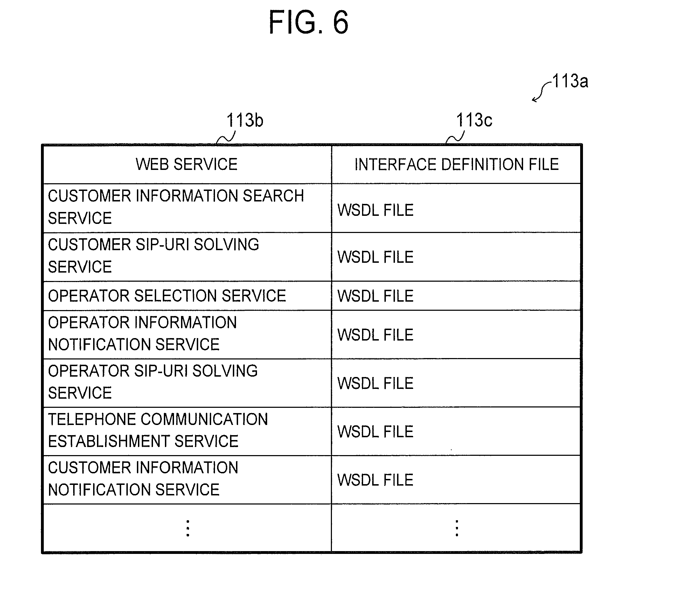

Returning to Fig. 2, the Web service information storage area 113 stores interface information that specifies an interface of a Web service provided by a server in the group of servers 130. For example, in the present embodiment, an interface information table 113a as shown in Fig. 6 (a schematic diagram showing the interface information table 113a) is stored.

As shown in the figure, the interface information table 113a has a Web service field 113b and an interface definition file field 113c.

The Web service field 113b stores information that specifies a Web service provided by a server in the group of servers 130. For example, in the present embodiment, a service name of a Web service is stored as the information specifying such a Web service.

The interface definition file field 113c stores information that specifies a file defining an interface, which in turn specifies a message, a communication address and the like to use the Web service specified in the Web service field 113b. For example, in the present embodiment, a file name of an interface definition file is stored as the information specifying such a file defining an interface.

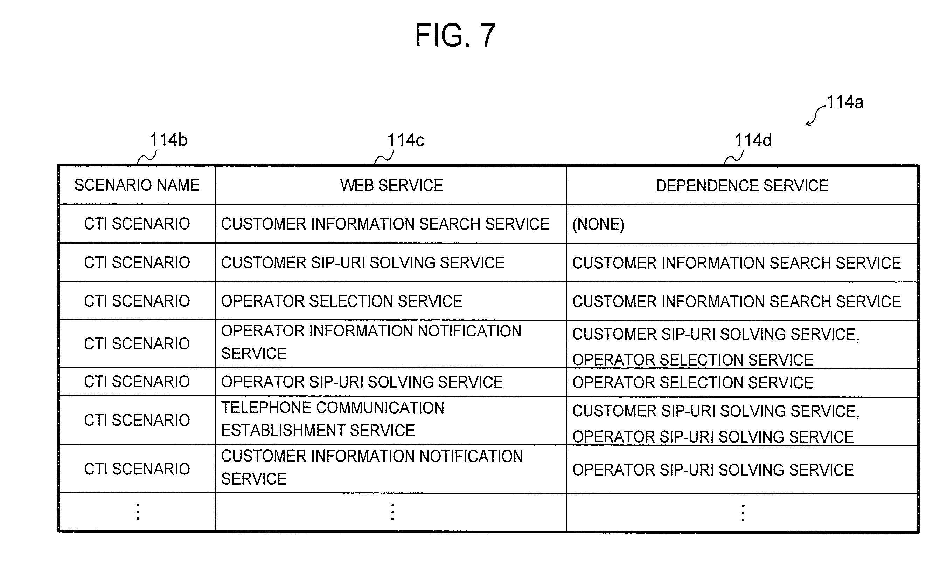

Returning to Fig. 2, the dependency information storage area 114 stores dependency information. Dependency information specifies Web services that should have been finished before executing a Web service as a component of a scenario. For example, in the present embodiment, a dependency information table 114a as shown in Fig. 7 (a schematic diagram showing the dependency information table 114a) is stored in the dependency information storage area 114.

As shown in the figure, the dependency information table 114a has a scenario name field 114b, a Web service field 114c, and a dependence service field 114d.

The scenario name field 114b stores information that specifies a scenario used for coordinated processing performed by the dynamic service coordinating apparatus 110. For example, in the present embodiment, a scenario name is stored as the information specifying such a scenario.

The Web service field 114c stores information that specifies a Web service as a component of the scenario specified in the scenario name field 114b. For example, in the present embodiment, a service name of a Web service is stored as the information specifying such a Web service.

The dependence service field 114d stores information that specifies Web services that are executed just before the Web service specified in the Web service field 114c and should have been finished before executing that Web service. For example, in the present embodiment, service names of Web services are stored as the information specifying such Web services.

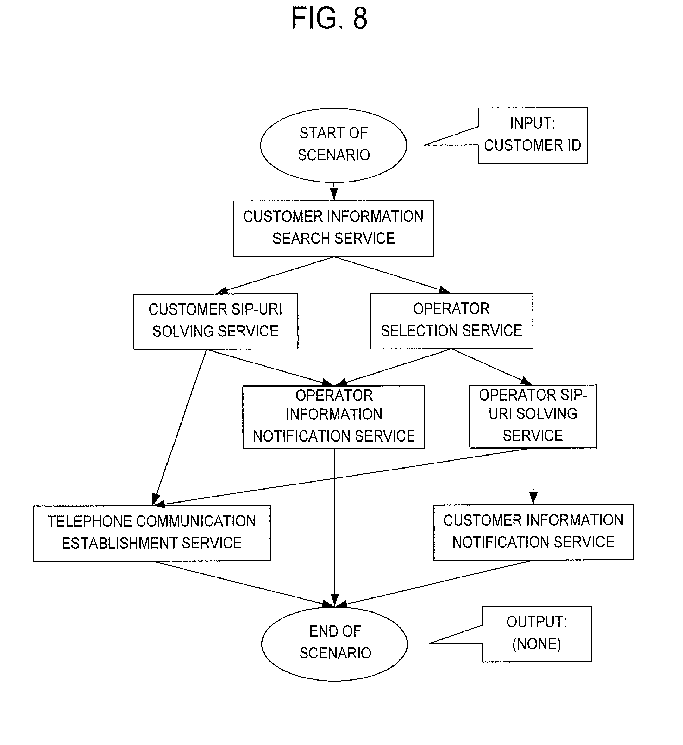

For example, in the case of the above-mentioned CTI scenario, processing is performed in the sequence shown in Fig. 8 (a schematic diagram showing a processing sequence of a CTI scenario).

First, "Customer information search service" is executed, and thereafter "Customer SIP-URI solving service" and "Operator selection service" are executed. Consequently, "Customer SIP-URI solving service" and "Operator selection service" cannot be executed before "Customer information search service" has been executed.

Further, after "Customer SIP-UR solving service" and "Operator selection service" have been executed, "Operator information notification service" is executed. Consequently, "Operator information notification service" cannot be executed before "Customer SIP-URI solving service" and "Operator selection service" have been executed.

Further, after "Operator selection service" has been executed, "Operator SIP-URI solving service" is executed. Consequently, "Operator SIP-URI solving service" cannot be executed before "Operator selection service" has been executed.

Further, after "Customer SIP-URI solving service" and "Operator SIP-URI solving service" have been executed, "Telephone communication establishment service" is executed. Consequently, "Telephone communication establishment service" cannot be executed before "Customer SIP-URI solving service" and "Operator SIP-URI solving service" have been executed.

Further, after "Operator SIP-URI solving service" has been executed, "Customer information notification service" is executed. Consequently, "Customer information notification service" cannot be executed before "Operator SIP-URI solving service" has been executed.

The above-described dependencies can be put into the dependency information table 114a as shown in Fig. 7.

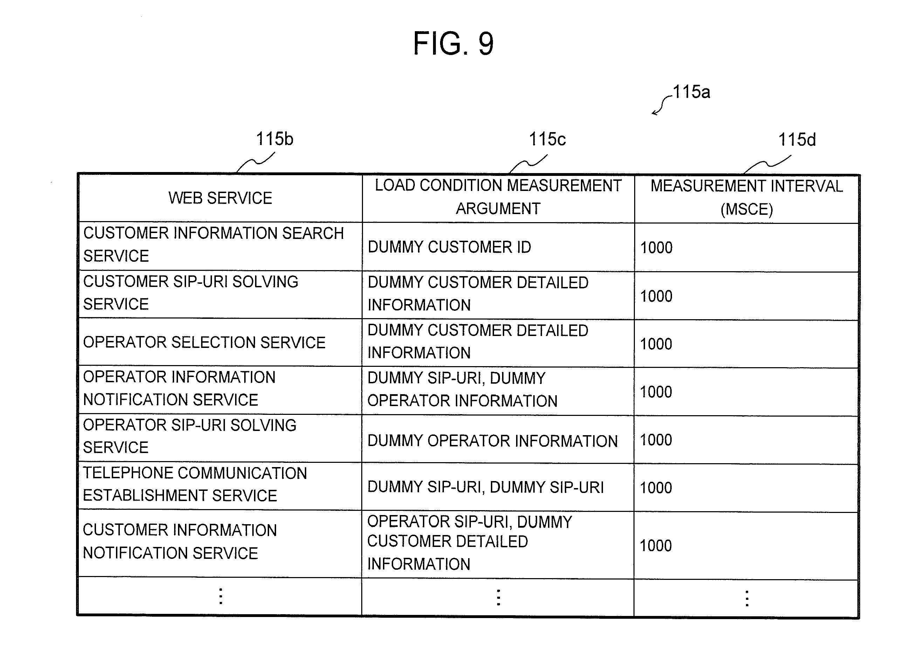

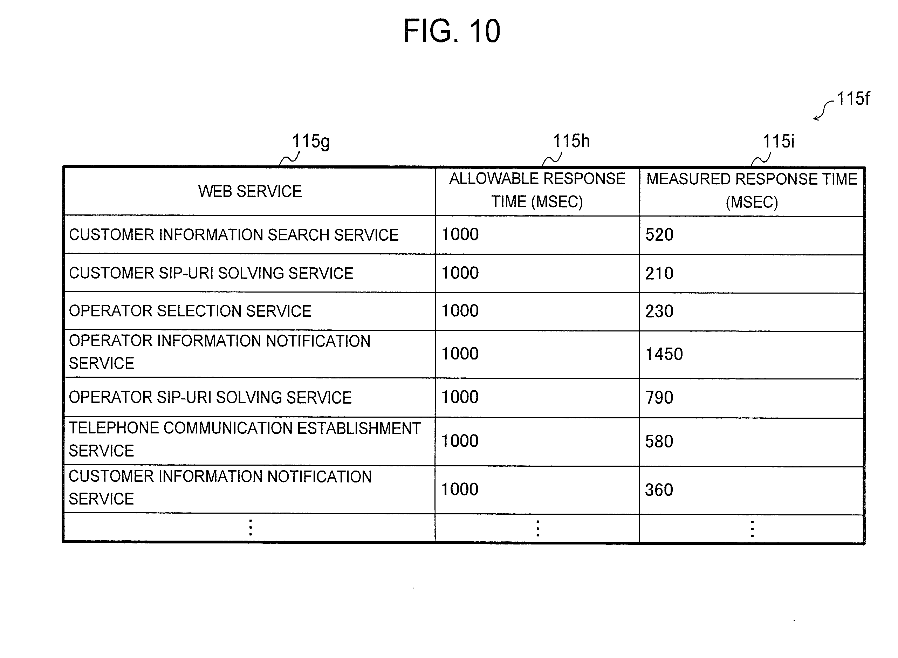

Returning to Fig. 2, the load condition information storage area 115 stores load condition measurement setting information and load condition judgment information. The load condition measurement setting information specifies settings for measuring a load condition of a Web service provided by each server in the group of servers 130. And, the load condition judgment information specifies the measured load condition and a judgment criterion for judging that load condition. For example, in the present embodiment, a load condition measurement setting information table 115a as shown in Fig. 9 (a schematic diagram showing the load condition measurement setting information table 115a) and a load condition judgment information table 115f as shown in Fig. 10 (a schematic diagram showing the load condition judgment information table 115f) are stored in the load condition information storage area 115.

The load condition measurement setting information table 115a shown in Fig. 9 has a Web service field 115b, a load condition measurement argument field 115c, and a measurement interval field 115d.

The Web service field 115b stores information that specifies a Web service provided by each server in the group of servers 130. For example, in the present embodiment, a service name of a Web service is stored as the information specifying such a Web service.

The load condition measurement argument field 115c stores information that specifies request-use dummy data (dummy arguments), which are used at the time of sending an execution request for measurement of a load condition of the Web service specified in the Web service field 115b.

The measurement interval field 115d stores information that specifies a measurement interval of measurement of a load condition of the Web service specified in the Web service field 115b.

The load condition judgment information table 115f shown in Fig. 10 has a Web service field 115g, an allowable response time field 115h, and a measured response time field 115i.

The Web service field 115g stores information that specifies a Web service provided by each server in the group of servers 130. For example, in the present embodiment, a service name of a Web service is stored as the information specifying such a Web service.

The allowable response time field 115h stores information that specifies a threshold used in judgment of a load condition of the Web service specified in the Web service field 115g. For example, in the present embodiment, the value of the allowable response time that becomes the upper limit of an allowable range of the load condition is stored as the threshold used in judgment of the load condition.

The measured response time field 115i stores information that specifies a load condition value measured in the Web service specified in the Web service field 115g. For example, in the present embodiment, a measured response time is stored as the measured load condition value.

The control part 117 comprises an overall control part 118, a load condition measurement part 119, a scenario generation part 120, a load condition judgment part 121, and a scenario execution part 122.

The overall control part 118 controls the whole processing in the dynamic service coordinating apparatus 110. For example, the overall control part 118 receives a request message for execution of a scenario from the user-side communication terminal 140 through the communication part 124, and instructs the scenario execution part 122 to execute the scenario.

The load condition measurement part 119 measures a load condition of a service provided by each server in the group of servers 130 at a previously-determined time, and stores the measured value in the measured response time field 115i of the load condition judgment information table 115f.

The scenario generation part 120 specifies a Web service that can be executed among the Web services included in the scenario on the basis of the dependency information table 114a, and instructs the load condition judgment part 121 to judge the load condition of the specified Web service.

Then, based on the result of the judgment by the load condition judgment part 121, the scenario generation part 120 extracts a Web service that is not in a high load condition (i.e. in a low load condition), and outputs the extracted Web service to the scenario execution part 122.

The load condition judgment part 121 performs load condition judgment processing in response to the instruction from the scenario generation part 120.

For example, the load condition judgment part 121 judges that the Web service in question is in the high load condition if the value stored in the measured response time field 115i of the load condition judgment information table 115f is larger than the value stored in the allowable response time field 115h.

The scenario execution part 122 controls processing of executing the Web service extracted by the scenario generation part 120.

The communication part 124 sends and receives information through the network 170.

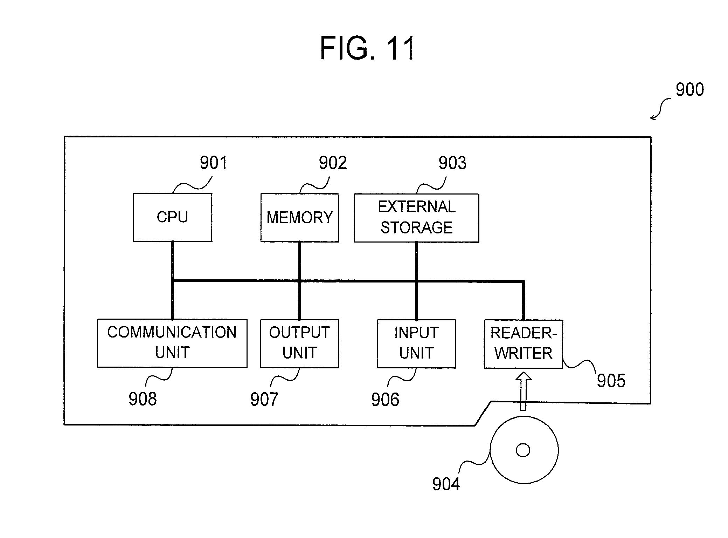

The above-described dynamic service coordinating apparatus 110 can be implemented by an ordinary computer 900, for example as shown in Fig. 11 (a schematic diagram showing the computer 900), comprising a Central Processing Unit (CPU) 901, a memory 902, an external storage 903 such as a Hard Disk Drive (HDD), a reader-writer 905 for reading and writing information from and to a portable storage medium 904 such as a Compact Disk (CD), a Digital Versatile Disk (DVD) or the like, an input unit 906 such as a keyboard and/or a mouse, an output unit 907 such as a display, and a communication unit 908 such as a Network Interface Card (NIC) for connection to a communication network.

For example, the storage part 111 can be implemented when the CPU 901 uses the memory 902 or the external storage 903. The control part 117 can be implemented when a prescribed program stored in the external storage 903 is loaded into the memory 902 and executed by the CPU 901. An input part can be implemented when the CPU 901 uses the input unit 906. And, the communication part 124 can be implemented when the CPU 901 uses the communication unit 908.

The prescribed program may be downloaded from a storage medium 904 through the reader-writer 905, or from a network through the communication unit 908, into the external storage 903, and then loaded into the memory 902, to be executed by the CPU 901. Or, the prescribed program may be directly loaded into the memory 902 from a storage medium 904 through the reader-writer 905, or from a network through the communication unit 908, to be executed by the CPU 901.

Returning to Fig. 1, the group of servers 130 includes servers that provide respective Web services included in a scenario executed by the dynamic service coordinating apparatus 110.

For example, as for the above-mentioned CTI scenario, the group includes a customer information search server 131, a customer SIP-URI solving server 132, an operator selection server 133, an operator information notification server 134, an operator SIP-URI solving server 135, a telephone communication establishment server 136, and a customer information notification server 137.

The customer information search server 131 refers to a customer information database in response to input of a customer ID, and outputs detailed information such as the corresponding customer's name, customer rank, purchase history and the like.

Based on input of the detailed information of the customer, the customer SIP-URI solving server 132 refers to an NGN line subscribers' SIP-URI database held by a telecommunications carrier that manages NGN implemented as the network 170, and outputs the SIP-URI of the user-side telecommunication terminal 141 of the customer.

Based on the customer's detailed information such as the customer rank, purchase history and the like, the operator selection server 133 selects an operator corresponding to the customer, and outputs operator information such as the operator's ID, name and the like.

In response to input of the SIP-URI of the customer's user-side telephone terminal 141 and the operator information, the operator information notification server 134 generates a Web page for displaying the operator's information, and sends the URL of the Web page to the customer's user-side telephone terminal 141 by using the Short Message Service (SMS) function.

The operator SIP-URI solving server 135 performs processing similar to the processing performed by the customer SIP-URI solving server 132. Thus, in response to input of operator information, the operator SIP-URI solving server 135 outputs the SIP-URI of the operator-side telephone terminal 151 of the corresponding operator.

The telephone communication establishment server 136 receives input of the SIP-URI of the user-side telephone terminal 141 of the customer and the SIP-URI of the operator-side telephone terminal 151 of the operator, and establishes a telephone communication between both terminals by using the Third Party Call Control (3PCC) function of NGN.

In response to input of the SIP-URI of the operator-side telephone terminal 151 of the operator and the detailed information of the customer, the customer information notification server 137 generates a Web page for displaying the detailed information of the customer, and sends the URL of the Web page to the operator-side telephone terminal 151 of the operator by using the SMS function.

Also each server in the group of servers 130 can be implemented by a computer as shown in Fig. 11.

In response to an operator's instruction, the user-side communication terminal 140 sends a scenario execution instruction to the dynamic service coordinating apparatus 110. A scenario execution instruction includes information specifying a user and a scenario (such as a customer ID and a scenario name). In reply to the scenario execution instruction, the user-side communication terminal 140 receives the execution result of the scenario.

Also the user-side communication terminal 140 can be implemented by a computer as shown in Fig. 11.

The user-side telephone terminal 141 is a telephone terminal that establishes a voice communication by SIP through NGN implemented as the network 170, in order to enable a voice communication.

The operator-side communication terminal 150 receives customer's detailed information or the like from the group of servers 130, and outputs (displays) the received information to an output part.

Also the operator-side communication terminal 150 can be implemented by a computer as shown in Fig. 11.

The operator-side telephone terminal 151 is a telephone terminal that establishes a voice communication by SIP through NGN implemented as the network 170, in order to enable a voice communication.

The Web store server 160 provides a platform for realizing a Web store.

Also the Web store server 160 can be implemented by a computer as shown in Fig. 11.

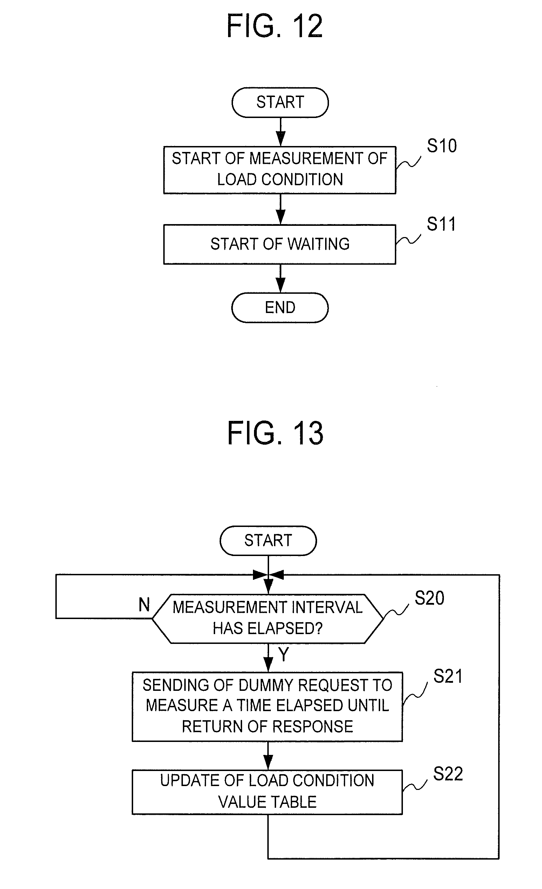

Fig. 12 is a flowchart showing start-up processing of the dynamic service coordinating apparatus 110.

First, when the dynamic service coordinating apparatus 110 receives input of a start-up instruction from the operator, the overall control part 118 starts processing, and the load condition measurement part 119 starts measuring of the load condition of each Web service (S10). The load condition measurement process by the load condition measurement part 119 will be described in detail referring to Fig. 13.

Next, the overall control part 118 starts receiving of a request message for requesting execution of a scenario (S11).

Fig. 13 is a flowchart showing the load condition measurement processing by the dynamic service coordinating apparatus 110.

First, the load condition measurement part 119 of the dynamic service coordinating apparatus 110 judges for each Web service whether the measurement interval stored in the measurement interval field 115d of the load condition measurement setting information table 115a has elapsed (S20). If there is a Web service whose measurement interval has elapsed (Yes in the step S20), the processing proceeds to the step S21. If there is no Web service whose measurement interval has elapsed (No in the step S20), the processing returns to the step S20 to repeat the processing there.

In the step S21, the load condition measurement part 119 sends a dummy request message to the server that provides the Web service whose measurement interval was judged to have elapsed in the step S20, in order to measure its response time.

For example, the load condition measurement part 119 obtains dummy request arguments for use in measurement of the load condition of the Web service whose measurement interval was judged to have elapsed in the step S20 from the load condition measurement argument field 115c of the load condition measurement setting information table 115a.

Then, according to the interface of the Web service in question, the load condition measurement part 119 sends through the communication part 124 a request message that stores the obtained dummy request arguments, to measure a time (a response time) elapsing until reception of a response to the dummy request message (a response time). That interface is specified in the interface definition file field 113c of the interface information table 113a.

Next, in the load condition judgment information table 115f, the load condition measurement part 119 stores the measured response time in the measured response time field 115i of the record for which the Web service of the measured response time is stored in the Web service field 115g (S22).

Here, in the present embodiment, the method of measuring the load condition and the method of judging are not limited to the above-described methods. For example, it is possible to use not an active method of sending a dummy request message to execute a Web service in order to measure load condition irrespective of execution of a scenario, but a passive method of measuring and obtaining a time taken to execute a Web service during execution of a scenario.

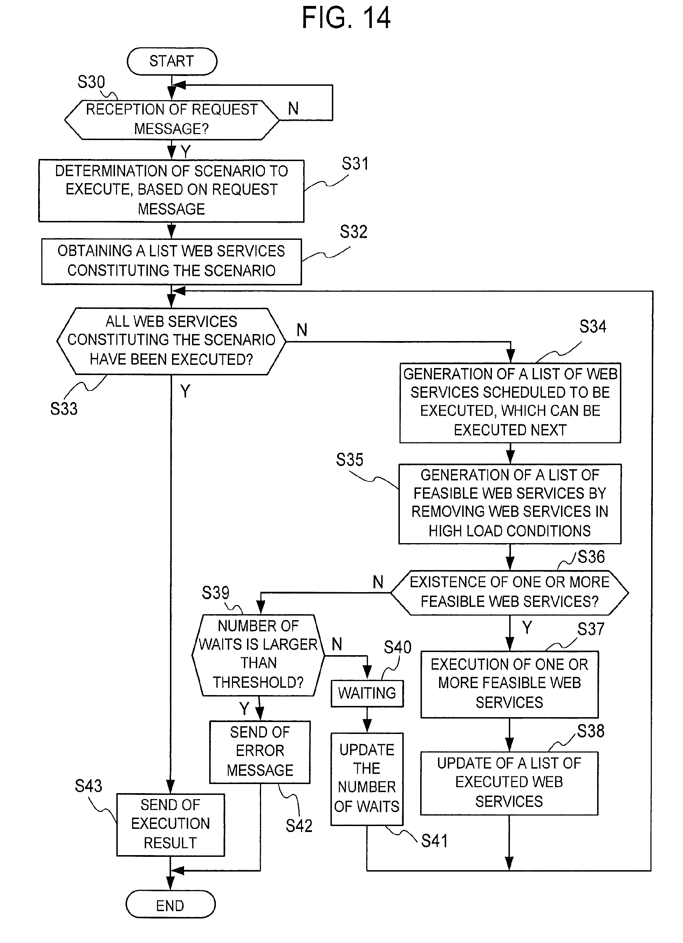

Fig. 14 is a flowchart showing service coordination processing in the dynamic service coordinating apparatus 110.

First, the overall control part 118 of the dynamic service coordinating apparatus 110 receives a request message for executing a scenario from the user-side communication terminal 140 (S30). In the example of a CTI scenario, when the customer of the user-side communication terminal 140 inputs an execution instruction designating the detail inquiry button in the Web screen data obtained from the Web store server 160, a request message for execution of the scenario of the detail inquiry in question is sent to the dynamic service coordinating apparatus 110.

Next, the scenario execution part 122 of the dynamic service coordinating apparatus 110 analyzes the received request and determines a scenario to be executed (S31). For example, the scenario execution part 122 determines a scenario to be executed depending on the request class or the like included in the received request.

Next, the scenario execution part 122 specifies the record for which information corresponding to the scenario determined in the step S31 is stored in the scenario name field 112b in the scenario setting information table 112a, and obtains a list of Web services included in the scenario to be executed from the list-of-constituent-Web services field 112d of the specified record (S32).

For example, in the case of a CTI scenario, the obtained list s includes "Customer information search service", "Customer SIP-URI solving service", "Operator selection service", "Operator information notification service", "Operator SIP-URI solving service", "Telephone communication establishment service", and "Customer information notification service".

Next, the scenario execution part 122 checks whether all the Web services included in the Web service list obtained in the step S32 have been executed (S33). If all the Web services have been executed (Yes in the step S33), the processing proceeds to the step S43. If not all the Web services have been executed (No in the step S33), the processing proceeds to the step S34.

In the step S34, the scenario generation part 120 refers to a list of executed Web services and the dependency information table 114a, to generate a list of Web services scheduled to be executed, i.e. a list of Web services to be executed next (S34).

For example, the scenario generation part 120 determines, as the Web services to execute next, Web services that have not been executed yet among Web services stored in the Web service field 114c of records for each of which the scenario name stored in the scenario name field 114b of the dependency information table 114a indicates the scenario in execution and the value "none" is stored in the dependence service field 114d or all Web services specified in the dependence service field 114d have been executed.

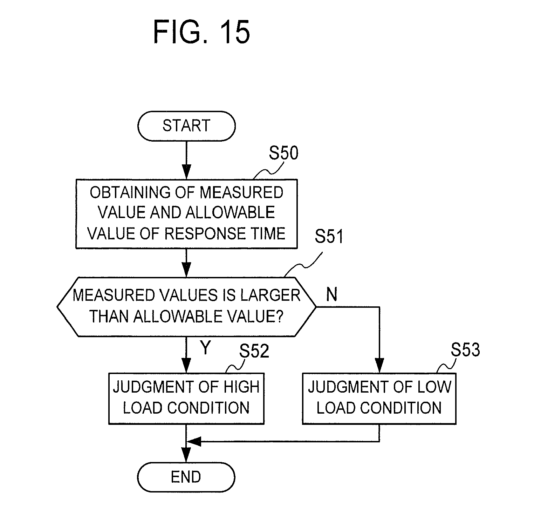

Next, the scenario generation part 120 instructs the load condition judgment part 121 to judge a load condition for each of the Web services included in the list of Web services scheduled to be executed, which is generated in the step S34. Then, the scenario generation part 120 removes Web services judged to be in high load condition by the load condition judgment part 112 from the list of Web services scheduled to be executed, to generate a feasible Web service list, i.e. a list of feasible Web services (S35). The load condition judgment processing by the load condition judgment part 121 will be described in detail referring to Fig. 15.

Next, the scenario generation part 120 checks whether one or more Web services are included in the feasible Web service list generated in the step S36 (S36). If one or more Web services are included in the feasible Web service list (Yes in S36), the processing proceeds to the step S37. If no Web service is included in the feasible Web service list (No in S36), the processing proceeds to the step 539.

In the step S37, the scenario execution part 122 executes Web services included in the feasible Web service list to the number less than or equal to the number specified in the maximum-number-of-Web-services-executed-in-parallel field 112e. Here, if the number of the Web services included in the feasible Web service list exceeds the number specified in the maximum-number-of-Web-services-executed-in-parallel field 112e, the scenario execution part 122 selects and executes Web services to the number specified in that field 112e out of the feasible Web service list (the processing is performed through the servers that provide the Web services in question).

Here, the method of selecting can be previously set in the dynamic service coordinating apparatus 110. For example, it is possible to select preferentially a Web service for which, in a load condition judgment information table 115f, a difference between the value stored in the allowable response time field 115h and the value stored in the measured response time field 115i is larger. Or, it is possible to select preferentially Web services in the order of largest number of elements stored in the dependence service field 114d of the dependency information table 114a. Further, it is possible to select preferentially Web services in the order of storing (i.e. in the order in which Web services are placed from above) in the list-of-constituent-Web-services field 112d of the scenario setting information table 112a.

Then, the scenario execution part 122 adds the Web services executed in the step S37 to an executed Web service list, i.e. a list of executed Web services (the initial value of the executed Web service list is set to an empty set). And, the processing is repeated by returning to the step S33.

On the other hand, in the step S39, the scenario execution part 122 judges whether the number of waits (i.e. the number of actual occurrences of waits) exceeds the maximum number of waits stored in the maximum-number-of waits field 112g of the scenario setting information table 112a. If the number of waits does not exceed the maximum number of waits (No in the step S39), the processing proceeds to the step S40. On the other hand, if the number of waits exceeds the maximum number of waits (Yes in the step S39), the processing proceeds to the step S42.

In the step S40, the scenario execution part 122 waits for execution of the processing for a period of the waiting time stored in the waiting time field 112f of the scenario setting information table 112a.

Then, the scenario execution part 122 increments the value of the number of waits by "1" (the initial value of the number of waits is "0") (S41), and returns to the step S33 to repeat the processing.

On the other hand, in the step S42, the scenario execution part 122 generates an error message telling for example "Not executable due to the high load condition", and sends the message to the user-side communication terminal 140 through the communication part 124, to end the execution of the scenario.

Further, in the step S43, the scenario execution part 122 refers to the variable stored in the variable-for-sending-response field 112i of the scenario setting information table 112a, to generate a response message. Then, the scenario execution part 122 sends the response message to the user-side communication terminal 140 through the communication part 124, to end the execution of the scenario.

Fig. 15 is a flowchart showing the load condition judgment processing in the dynamic service coordinating apparatus 110.

First, the load condition judgment part 121 of the dynamic service coordinating apparatus 110 specifies a record whose Web service field 115g stores information corresponding to the Web service of which the scenario generation part 120 instructed to judge the load condition. Then, the load condition judgment part 121 obtains values stored in the allowable response time field 115h and the measured response time field 115i (S50).

Next, the load condition judgment part 121 judges whether the value stored in the measured response time field 115i, which has been obtained in the step S50, is larger than the value stored in the allowable response time field 115h (S51). If the value stored in the measured response time field 115i is larger than the value stored in the allowable response time field 115h (Yes in the step S51), the processing proceeds to the step S52. If the value stored in the measured response time field 115i is not larger than the value stored in the allowable response time field 115h (No in the step S51), the processing proceeds to the step S53.

In the step S52, it is judged that the Web service of which the scenario generation part 120 instructed to judge the load condition is in the high load condition. And, the judgment result is outputted to the scenario generation part 120.

On the other hand, in the step S53, it is judged that the Web service of which the scenario generation part 120 instructed to judge the load condition is in the low load condition. And, the judgment result is outputted to the scenario generation part 120.

If there are a plurality of Web services of which the scenario generation part 120 instructed to judge load conditions, the processing of Fig. 15 is performed repeatedly.

In the above-described embodiment, a response time is used as the measured value of the load condition. However, the present invention is not limited by such an embodiment. For example, it is possible to use a probability that a Web service has received a request normally in a certain period of time. As another example, it is possible to obtain Round Trip Time (RTT) and a packet loss rate by sending a ping to each server providing a Web service and by using the obtained values as measured values of load condition, it is possible to previously set allowable values corresponding to these measure values.

Further, in the above-described embodiment, processing of one function is performed in one server in the group of servers 130. However, the present invention is not limited to such an embodiment. It is possible to arrange that processing of a plurality of functions is performed in one server.

Further, the above-described embodiment has been described taking a CTI scenario as a concrete example of scenario. However, the present invention is not limited to such an embodiment. It is preferable that the dynamic service coordinating apparatus 110 performs coordinated processing by executing a scenario appropriate to a request among a plurality of scenarios.

Further, in the above-described embodiment, the step S35 of Fig. 14 specifies a feasible Web service out of the Web services specified in the step S34 as Web services scheduled to be executed. However, the present invention is not limited to such an embodiment. For example, it is possible that after specifying Web service scheduled to execute, the scenario execution part 122 executes any Web service among the specified Web services scheduled to be executed (without specifying a feasible Web service).

### Explanations of letters and numerals

100: service providing system, 110: dynamic service coordinating apparatus, 111: storage part, 112: scenario information storage area, 113: Web service information storage area, 114: dependency information storage area, 115: load condition information storage area, 117: control part, 118: overall control part, 119: load condition measurement part, 120: scenario generation part, 121: load condition judgment part, 122: scenario execution part, 124: communication part, 130: group of servers, 140: user-side communication terminal, 141: user-side telephone terminal, 150: operator-side communication terminal, 151: operator-side telephone terminal, 160: Web store server

## Claims

1. A service coordinating apparatus that coordinates a plurality of Web services according to a scenario, to perform processing corresponding to the scenario, wherein:
the service coordinating apparatus comprises:
a storage part for storing dependency information that specifies for each scenario one Web service and other Web services that should have been executed when the one Web service is executed; and
a control part; and
the control part repeats processing of specifying based on the dependency information the one Web service for which the above-mentioned other Web services have been executed and executing the specified Web service, until there is no Web service included in the scenario.

2. A service coordinating apparatus of Claim 1, wherein:
the control part:
has obtained a load condition of the Web services included in the scenario; and
executes a Web service among the Web services specified based on the dependency information, except for Web services for which the load conditions are each judged to be a high load.

3. A service coordinating apparatus of Claim 2, wherein:
when all the Web services specified based on the dependency information are judged to have high loads with respect to the load conditions, the control part waits for execution of a Web service in a previously-determined period of time.

4. A service coordinating apparatus of Claim 3, wherein:
after waiting for execution of a Web service in the previously-determined period of time, the control part executes a Web service among the Web services specified based on the dependency information, except for the Web services for which the load conditions are each judged to be a high load.

5. A service coordinating apparatus of Claim 2, wherein:
the control part obtains a load condition by executing a Web service included in the scenario by use of dummy data.

6. A program for making a computer function as a service coordinating apparatus that coordinates a plurality of Web services according to a scenario to perform processing corresponding to the scenario, wherein the program:
makes the computer function as a storage means, which stores dependency information that specifies for each scenario one Web service and other Web services that should have been executed when the one Web service is executed, and a control means; and
makes the control means repeat processing of specifying based on the dependency information the one Web service for which the above-mentioned other Web services have been executed and executing the specified Web service, until there is no Web service included in the scenario.

7. A program of Claim 6, wherein:
the program makes the control means, which has obtained a load condition of the Web services included in the scenario, execute a Web service among the Web services specified based on the dependency information, except for Web services for which the load conditions are each judged to be a high load.

8. A program of Claim 7, wherein:
the program makes the control means wait for execution of a Web service in a previously-determined period of time, when all the Web services specified based on the dependency information are judged to have high loads with respect to the load conditions.

9. A program of Claim 8, wherein:
the program makes the control means execute a Web service among the Web services specified based on the dependency information, except for the Web services for which the load conditions are each judged to be a high load, after waiting for execution of a Web service in the previously-determined period of time.

10. A program of Claim 7, wherein:
the program makes the control means obtain a load condition by executing a Web service included in the scenario by use of dummy data.

11. A service coordination method in which a service coordinating apparatus, which comprises a storage part for storing dependency information that specifies for each scenario one Web service and other Web services that should have been executed when the one Web service is executed and a control part, coordinates a plurality of Web services according to a scenario, to perform processing corresponding to the scenario, comprising:
a step in which the control part repeats processing of specifying based on the dependency information the one Web service for which the above-mentioned other Web services have been executed and executing the specified Web service, until there is no Web service included in the scenario.

12. A service providing system comprising a user-side terminal, Web servers, and a service coordinating apparatus, wherein:
the service coordinating apparatus comprises: a storage part for storing dependency information that specifies for each scenario one Web service and other Web services that should have been executed when the one Web service is executed; and a control part; and
the control part of the service coordinating apparatus performs processing of:
receiving of a request that specifies a scenario to execute from the user-side terminal; and
repeating of processing in which, among the Web services included in the scenario specified by the request, the one Web service for which the above-mentioned other Web services have been executed is specified based on the dependency information, and the specified Web service is executed, until there is no Web service included in the scenario.
